# NEUE EUROPÄISCHE PATENTSCHRIFT

(11) **EP 0 194 974 B2**
(45) Veröffentlichungstag und Bekanntmachung des Hinweises auf die Entscheidung über den Einspruch: **28.08.1996**
(45) Hinweis auf die Patenterteilung: 22.06.1988
(21) Anmeldenummer: 86810125.4
(22) Anmeldetag: 12.03.1986
(51) Int. Cl.: H01B 3/04

(54) **Verfahren zur Herstellung von imprägnierbaren Feinglimmerbändern mit eingebautem Beschleuniger**
Process for manufacturing impregnatable thin mica strips containing an accelerator
Procédé de fabrication de rubans de mica fins pour l'imprégnation contenant un accélérateur

(30) Priorität: 15.03.1985 CH 1181/85
(43) Veröffentlichungstag der Anmeldung: 17.09.1986
(73) Patentinhaber: Schweizerische Isola-Werke, CH-4226 Breitenbach (CH)
(72) Erfinder: Schmidlin, Benno, CH-4243 Dittingen (CH); Brandenberger, Kurt, CH-4226 Breitenbach (CH)
(74) Vertreter: Zimmermann, Hans

(56) Entgegenhaltungen:
- EP-A- 12 946
- EP-A- 12 946
- EP-A- 31 555
- AT-A- 353 344
- AT-A- 353 344
- AT-A- 369 204
- AT-A- 369 204
- AT-A- 369 204
- BE-A- 781 814
- BE-A- 781 814
- CH-A- 547 001
- CH-A- 547 001
- DE-A- 1 162 898
- DE-A- 1 162 898
- DE-A- 1 162 898
- DE-A- 1 219 554
- DE-A- 1 219 554
- DE-A- 1 219 554
- DE-A- 1 613 245
- DE-A- 2 846 114
- DE-A- 2 846 114
- DE-A- 2 856 562
- DE-A- 2 856 562
- DE-A- 3 003 477
- DE-A- 3 003 477
- DE-A- 3 218 287
- DE-A- 3 218 287
- DE-A- 3 234 792
- DE-A- 3 234 792
- DE-A- 3 234 792
- DE-A- 3 234 792
- FR-A- 1 378 290
- FR-A- 1 378 290
- FR-A- 2 549 277
- FR-A- 2 549 277
- GB-A- 1 557 960
- GB-A- 1 557 960
- GB-A- 1 557 960
- US-A- 4 335 367
- US-A- 4 335 367
- IEEE Trans.Electr.Insul.,1978,Vol.EI-13(5) pp.343-348
- AIK Technical Inform. Date Sheet 2/069/E
- AIK Tech. Information Date Sheet 2/069/E
- IEEE Trans. Electr. Insul. 1978 Vol.EI - 13(5) pp.343 -348.

## Beschreibung

Bekanntlich werden zur Isolierung von Wicklungen von elektrischen Maschinen imprägnierbare Feinglimmerbänder verwendet, die nach dem Aufwikkeln auf die Leiter unter Vakuum und Druck mit einem lösungsmittelfreien Imprägnierharz getränkt und danach unter Wärmeeinwirkung ausgehärtet werden (Vakuum-Druck-Imprägnierung,VPI-Verfahren).

Als Imprägnierharze werden in der Regel niedrigviskose Epoxidharze in Kombination mit flüssigen Säureanhydriden als Härter eingesetzt. Diese sogenannten Epoxy-Anhydrid-Systeme benötigen jedoch einen Beschleuniger, damit eine wirtschaftliche Härtungszeit erreichbar ist. Setzt man den Beschleuniger dem Imprägnierharz zu, so hat das Imprägnierharz eine verminderte Lagerstabilität, d.h., seine Viskosität steigt an. Dieser Viskositätsanstieg erschwert bzw. verunmöglicht die Imprägnierung der aus den imprägnierbaren Feinglimmerbändern hergestellten Wicklungen; daher treten bei der Lagerung von beschleunigerhaltigen Imprägnierharzen hohe Verluste an Imprägnierharz ein. Deshalb ist man dazu übergegangen, den Beschleuniger in die imprägnierbaren Feinglimmerbänder einzubauen, so dass er erst bei der Imprägnierung mit dem Epoxy-Anhydrid-System in Berührung kommt.

Als Beschleuniger für Epoxy-Anhydrid-Systeme eignen sich metallorganische Verbindungen, wie z.B. Zinknaphthenat, Kobaltnaphthenat, Zinkoctoat und Kobaltoctoat. Auch Metallacetylacetonate werden verwendet (US-PS Nr. 4 335 367). Ebenfalls bekannt sind Beschleuniger auf Aminbasis, z.B. die sogenannten Oxyaminharze.

Beispielsweise offenbart die CH-PS Nr. 547 001 Oxyaminharze der Teilformel: 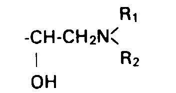 worin R₁ und R₂, die gleich oder verschieden sind, jeweils eine unverzweigte Alkylgruppe mit bis zu 5 Kohlenstoffatomen bedeuten oder R₁ und R₂ zusammen eine niedere Alkylengruppe, die durch ein Heteroatom unterbrochen sein kann, bilden.

Die DE-PS Nr. 2 846 114 C2 bezieht sich auf ein aus porösem Trägermaterial, Glimmer und einem Bindemittel bestehendes, mit flüssigem Epoxidharz-Härtersystem imprägnierbares Wickelband für die Isolation von Hochspannungsmaschinen, bei dem das Bindemittel, das als Härtungsbeschleuniger für das Imprägnierharz wirkt, ein Reaktionsprodukt von Polyepoxidverbindungen mit sekundären Alkylolaminen, wie Diäthanolamin, enthält.

Die DE-OS Nr. 2 856 562 und die entsprechende EP-OS Nr. 0 012 946 A1 beschreiben die Verwendung von tertiär gebundenen Stickstoff enthaltenden Polyesterharzen, die durch Kondensation äquimolarer Mengen einer Dicarbonsäure oder eines Dicarbonsäureanhydrids und eines tertiär gebundenen Stickstoff enthaltenden Glykols erhalten werden, als Klebe- und Beschleunigerharz in Glimmer enthaltenden Wickelbändern für die mit einem heisshärtenden Epoxidharz zu tränkende Hochspannungsisolierung elektrischer Maschinen und Apparate.

Auch quaternäre Oniumsalze können als Beschleuniger dienen. So offenbart die DE-OS Nr. 3 003 477 die Verwendung von Oniumsalzen der Formel: 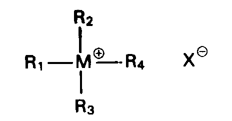 worin M ein Atom aus der 5. Hauptgruppe des Periodensystems, insbesondere Stickstoff oder Phosphor, bedeutet, R₁, R₂, R₃ und R₄ gleiche oder verschiedene aliphatische, aromatische, hererocyclische oder arylaliphatische Reste bedeuten, wobei die aliphatischen Reste noch weitere quartäre Atome enthalten können und drei Reste zusammen oder zwei Rest zusammen hererocyclischen Ringen angehören können, und X^{⊖} ein Anion ist, als Beschleuniger in einem als Bindemittel für ein Isolierband dienenden Epoxidharz. Ähnliche Oniumsalze für den gleichen Zweck sind in der DE-OS Nr. 3 218 287 A1 beschrieben.

Imprägnierbare Feinglimmerbänder bestehen in der Regel aus einer Feinglimmerfolie, die mittels eines Klebers mit einem Träger, z.B. einem Glasgewebe, einem Polyestervliesstoff oder einem Aramidpapier, verklebt ist. Bestimmte Beschleuniger, wie z.B. die Oxyaminharze, können auch als Kleber dienen. Andere Beschleuniger, z.B. metallorganische Verbindungen, können in der Kombination aus Glimmerfolie und Träger verteilt vorliegen. Als Kleber werden in der Regel Bisphenol-A-Epoxidharze eingesetzt, die bei der Härtung in das Imprägnierharz eingebaut werden und infolgedessen optimale Isolationseigenschaften ergeben.

Bei der Herstellung von imprägnierbaren Feinglimmerbändern ist es vorteilhaft, wenn der Klebergehalt möglichst gering gehalten wird, damit die Imprägnierbarkeit nicht nachteilig beeinflusst wird. Dies ist speziell bei Verwendung der Bänder in dickwandigen Wicklungen für Maschinen mit einer Nennspannung über 10kV von entscheidender Bedeutung. Andererseits sollen die Feinglimmerfolie und das Trägermaterial so gut miteinander verklebt sein, dass bei der maschinellen Verarbeitung der Bänder keine Ablösung der Feinglimmerfolie von dem Trägermaterial und keine Staubbildung durch abspringende Glimmerschuppen eintreten kann.

Des weiteren sollen sich die Eigenschaften des Bandes und seine Beschleunigerwirkung weder bei der Lagerung noch bei der vor dem Imprägnieren erfolgenden Trocknung einer aus dem Band hergestellten Wicklung durch Wärmeeinwirkung und Vakuum ungünstig verändern.

Ein Verfahren zur Herstellung von imprägnierbaren Isolierbändern des oben beschriebenen Typs ist aus der AT-PS Nr. 369 204 bekannt. Bei diesem Verfahren wird ein offenes gewebtes Trägermaterial mit einem Epoxidharzkleber imprägniert und mit einem Glimmerpapier verklebt. Als Epoxidharzkleber kann man vorteilhaft ein Bisphenol-Epoxidharz mit einem Schmelzpunkt von über 50°C oder auch ein Umsetzungsprodukt aus einer Polyepoxidverbindung und einem sekundären Amin, das als Katalysator für Epoxid-Imprägnierharz dient, verwenden. Eine verbesserte Imprägnierbarkeit wird dadurch erreicht, dass durch Gegenblasen, vorzugsweise mit Luft, offene harzfreie Felder entstehen. Das Glimmerpapier kann vor dem Aufbringen des Trägermaterials von der offenen Seite (Siebseite) her mit einem im Imprägnierharz löslichen härterfreien Epoxidharz derart vorimprägniert werden, dass das Glimmermaterial nur zur Hälfte bis Dreiviertel damit imprägniert wird, wonach das Trägermaterial auf der Vorimprägnierseite aufgebracht bzw. aufgeklebt wird.

Dieses relativ komplizierte Verfahren hat aber den Nachteil, dass das «als Katalysator für das Epoxid-Imprägnierharz» verwendete Klebharz nur in dem Trägermaterial vorhanden ist und somit nur örtlich beschleunigend wirken kann. Ferner können nur offen gewebte Trägermaterialien eingesetzt werden, denn bei der Imprägnierung von Vliesstoffen mit dem Klebharz entstünde eine geschlossene Fläche, was zu entsprechend schlechten Imprägniereigenschaften führen würde.

Die DE-OS Nr. 3 234 792 A1 bezieht sich auf ein imprägnierbares Feinglimmerband für die Isolation elektrischer Leiter, bei dem als Entstaubungsmittel für das Glimmerpapier und zugleich als Beschleuniger für die Härtung eines später im Tränkverfahren einzubringenden Epoxidharzes Zinknaphthenat verwendet wird.

Wenn das Zinknaphthenat überschüssig auf eine Seite des Glimmerpapiers aufgebracht wird, kann es zugleich auch als Kleber für die Verbindung von Glimmerpapier und Träger dienen. Zu diesem Zweck kann man das Glimmerpapier zunächst von einer Seite derart mit Zinknaphthenat beschichten, dass nur ein Teil des Zinknaphthenats als Entstaubungsmittel in das Glimmerpapier eindringt und der überwiegende Teil des Zinknaphthenats in hochviskoser Konsistenz als Kleber auf der beschichteten Seite verbleibt, worauf das Glimmerpapier und der Träger miteinander verbunden werden. Nach diesem Verfahren können imprägnierbare Feinglimmerbänder mit eingebautem Beschleuniger in einem einzigen Arbeitsgang hergestellt werden. Ferner haben solche Bänder eine gute Lagerfähigkeit, da keine weitere Komponente vorhanden ist, mit der eine Reaktion stattfinden könnte.

Da für eine gute Verklebung von Träger und Glimmerpapier mindestens ca. 8 g/m² Kleber erforderlich sind, können nach diesem Verfahren nur Bänder mit einem relativ hohen Beschleunigergethalt hergestellt werden. Wenn der Beschleunigergehalt herabgesetzt werden soll, muss ein Teil des Zinknaphthenats ersetzt werden, z.B. durch ein Bisphenol-Epoxidharz. Zu diesem Zweck wird der Epoxidkleber als geschlossener, grossflächiger Film auf das beschleunigerhaltige Glimmerpapier aufgebracht und dieses durch Andrücken mit dem Träger verbunden. Dadurch lässt sich wohl der gewünschte geringere Beschleunigergehalt erreichen, aber man erhält nicht die mechanischen Eigenschaften, die für eine maschinelle Verarbeitung derartiger Feinglimmerbänder erforderlich sind. Ausserdem ist ein derartiges Verfahren nur für die Herstellung von Feinglimmerbändern, die Zinknaphthenat als Beschleuniger enthalten, geeignet.

DE-B-1 219 554 bezieht sich auf ein Verfahren zum Herstellen von Isolierungen, insbesondere für Wicklungsstäbe und Isolierkörper, die aus Trägerschichten und hierauf vorzugsweise unter Anwendung eines Kunstharzklebers aufgebrachten Stoffen hoher elektrischer Festigkeit aufgewickelt oder aufgeschichtet sind und bei denen der Wickel- oder Schichtverband mit einem später ausgehärteten Harz, insbesondere Epoxidharz, durchtränkt wird. Um Nachteile, wie die Beeinträchtigung der Biegsamkeit und Verarbeitungsfähigkeit von Wickelbändern oder Folien, die bei gemeinsamer Auftragung von Kleber und Beschleuniger nach längeren Lagerzeiten auftreten können, zu vermeiden, wird vorgeschlagen, die Trägerschichten durch Ueberfluten mit oder Eintauchen in ein beschleunigerhaltiges, leicht verdampfendes Lösungsmittel, das vor der Imprägnierung mit dem Tränkharz wieder entfernt wird, mit dem für die spätere Härtung des anschliessend einzubringenden Tränkharzes erforderlichen Beschleuniger zu versehen. Der Beschleuniger kann vor oder nach dem Aufwikkeln des Band- oder Folienmaterials zugeführt werden, beispielsweise indem das Band- oder Folienmaterial in der angelieferten Form als Rolle im Ganzen mit dem in einem flüchtigen Mittel gelösten Beschleuniger durchtränkt wird oder indem das Wickelmaterial ohne Beschleuniger auf den Leiterstab, die Spule oder dergleichen aufgewickelt und danach durch Tränken mit dem Beschleuniger durchsetzt wird.

In EP-A-0 031 555 wird vorgeschlagen, ein festes Kondensationsprodukt aus Polyamin und Epoxidharz als Kleber, der den Beschleuniger chemisch gebunden enthält, zu verwenden, um die Gefahr der Migration des Beschleunigers in den Imprägnierharzvorrat und dessen Gelierung zu vermeiden.

Die vorliegende Erfindung bezieht sich auf ein Verfahren zur Herstellung von imprägnierbaren Feinglimmerbändern mit eingebautem Beschleuniger, bei dem die oben genannten Nachteile nicht auftreten. Das erfindungsgemässe Verfahren ist dadurch gekennzeichnet, dass man
A₁) eine Feinglimmerfolie mit einem von härtend wirkenden Komponenten freien Pulverlack, der mit einem Epoxy-Anhydrid-Imprägnierharzsystem chemisch zu reagieren vermag, bestreut,
B₁) entweder a) die mit dem Pulverlack bestreute Seite der Feinglimmerfolie unter dem Einfluss von Druck und Wärme mit einem Glasgewebe oder Vlies als Trägermaterial verklebt
oder b) ein Glasgewebe mit einem flüssigen Beschleuniger oder einer Lösung eines flüssigen oder festen Beschleunigers in einem niedrig siedenden Lösungsmittel imprägniert und das so erhaltene Trägermaterial unter dem Einfluss von Druck und Wärme mit der mit dem Pulverlack bestreuten Seite der Feinglimmerfolie verklebt und
C₁) das in Stufe B₁ erhaltene Verbundmaterial mit einem flüssigen Beschleuniger oder einer Lösung eines flüssigen oder festen Beschleunigers in einem niedrig siedenden Lösungsmittel imprägniert oder
A₂) eine Feinglimmerfolie mit einem flüssigen Beschleuniger oder einer Lösung eines flüssigen oder festen Beschleunigers in einem niedrig siedenden Lösungsmittel imprägniert,
B₂) die imprägnierte Feinglimmerfolie mit einem von härtend wirkenden Komponenten freien Pulverlack, der mit einem Epoxy-Anhydrid-Imprägnierharzsystem chemisch zu reagieren vermag, bestreut und
C₂) entweder a) ein Glasgewebe mit einem flüssigen Beschleuniger oder einer Lösung eines flüssigen oder festen Beschleunigers in einem niedrig siedenden Lösungsmittel imprägniert und das so erhaltene Trägermaterial unter dem Einfluss von Druck und Wärme mit der mit dem Pulverlack bestreuten Seite der Feinglimmerfolie verklebt
oder b) ein Vlies als Trägermaterial unter dem Einfluss von Druck und Wärme mit der mit dem Pulverlack bestreuten Seite der Feinglimmerfolie verklebt.

Als Trägermaterial eignen sich die in der Elektroisoliertechnik üblichen reissfesten, porösen Materialien, wie Glasgewebe mit einem Flächengewicht von 20 bis 40 g/m², Polyestervliesstoffe mit einem Flächengewicht von 20 bis 30 g/m² und Aramidpapiere mit einem Flächengewicht von 25 bis 42 g/m². Diese Trägermaterialien liefern Feinglimmerbänder, die sich durch ihre hervorragende Porosität und Imprägnierbarkeit auszeichnen.

Im erfindungsgemässen Verfahren lassen sich alle oben genannten Beschleuniger anwenden, die in niedrig siedenden Lösungsmitteln, wie Aceton, Toluol etc., löslich sind. Es kann sich um metallorganische Verbindungen oder um stickstoffhaltige Beschleuniger handeln.

Mittels des erfindungsgemässen Verfahrens kann der Beschleuniger sehr homogen im Glimmerpapier sowie im Trägermaterial verteilt werden; dies wirkt sich positiv auf eine gleichmässige und vollständige Aushärtung von mit einem Imprägnierharz imprägnierten Wicklungen aus.

Als Pulverlack kann man ein Harz verwenden, das mit einem Epoxy-Anhydrid-Imprägnierharzsystem chemisch zu reagieren vermag, vorzugsweise ein Bisphenol-A-Epoxidharz, das vorzugsweise einen Schmelzpunkt von über 100°C hat. Damit die Verklebung mit einer möglichst geringen Pulverlackmenge erfolgen kann, ist die Oberkorngrenze des Pulverlackes vorzugsweise nicht grösser als 250 µm.

Die Imprägnierung der Feinglimmerfolie bzw. des Trägermaterials mit dem flüssigen Beschleuniger bzw. der Beschleunigerlösung kann z.B. durch Tauchen erfolgen. Die Imprägnierung des Verbundmaterials in Stufe C₁) kann durch Tauchen, Lackieren oder Besprühen erfolgen. Dadurch kann einerseits eine sehr homogene Verteilung des Beschleunigers erreicht werden und andererseits verhindert werden, dass das Trägermaterial beim Schneiden der Bänder ausfranst.

Die mechanischen Eigenschaften von Feinglimmerbändern mit niedrigem Beschleunigergehalt können durch Beimischen eines geeigneten Klebharzes, das mit dem Beschleuniger nicht reagiert, aber chemisch in die Isolation eingebaut wird, wenn das imprägnierbare Feinglimmerband mit einem Epoxidharz imprägniert wird, verbessert werden.

Die Verklebung der Feinglimmerfolie mit dem Trägermaterial kann z.B. in einem Kalander erfolgen. Durch die nur punktweise Verklebung bleibt die gute Porosität bzw. Imprägnierbarkeit des Feinglimmerbandes erhalten, weil keine kontinuierliche Kleberschicht entsteht.

Überraschenderweise wurde nun gefunden, dass die erfindungsgemäss hergestellten Feinglimmerbänder nicht nur die oben erwähnten Vorteile haben, sondern auch eine ausgezeichnete Lagerstabilität aufweisen und die anfänglich erzielten Eigenschaften, wie Flexibilität und Beschleunigerwirkung innerhalb enger Grenzen, über einen längeren Zeitraum beibehalten. Die ausgezeichnete Lagerstabilität lässt sich dadurch erklären, dass der Pulverlack mit seiner geringen Oberfläche nur wenig mit dem Beschleuniger in Berührung kommt und daher bei der Lagerung praktisch keine Veränderung der Bandeigenschaften eintritt.

Die erfindungsgemäss hergestellten Feinglimmerbänder eignen sich hervorragend für die maschinelle Verarbeitung, da sie die dafür erforderlichen mechanischen Eigenschaften haben.

### Beispiel 1

Ein Feinglimmerpapier, bestehend aus unkalziniertem Muskovitglimmer, mit einem Flächengewicht von 160 ± 15 g/m² wird mit einem pulverförmigen, härterfreien Bisphenol-A-Epoxidharz mit einem Erweichungsbereich von 140 bis 155°C bestreut (Auftragsmenge etwa 10 g/m²) und unter Wärmeeinwirkung und Druck mit einem Träger verklebt. Zur Fertigstellung des Bandes wird die verklebte Glimmer-Träger-Kombination mit einer Lösung eines Beschleunigers in einem Lösungsmittel imprägniert und anschliessend getrocknet.

Als Beschleuniger wurde Zinknaphthenat in Form einer 10gew.%igen Lösung in Aceton verwendet. Als Träger wurden ein Glasgewebe mit einem Flächengewicht von 24 g/m² bzw. ein Polyestervlies mit einem Flächengewicht von 20 g/m² verwendet.

Die so hergestellten Bänder haben folgende Eigenschaften:

| | Band A | Band B |
|---|---|---|
| Träger | Glasgewebe | Polyestervlies |
| Beschleunigergehalt | 3,5 g/m² | 3,5 g/m² |
| Luftdurchlässigkeit nach Gurley-Hill (ASTM D 726) | 520 | 480 |

Die Feinglimmerbänder A und B haben hervorragende Lagerstabilität und lassen sich auch nach einer längeren Lagerung bei Raumtemperatur aufgrund der kaum veränderten Flexibilität ausgezeichnet verarbeiten. Die Biegesteifigkeit des Bandes A betrug:

| Lagerung bei Raumtemperatur | Biegesteifigkeit (IEC 626-2) N/m |
|---|---|
| Bei Anlieferung | 50 |
| Nach 65 Tagen | 54 |
| Nach 150 Tagen | 56 |
| Nach 210 Tagen | 58 |
| Nach 360 Tagen | 60 |

Die Feinglimmerbänder A und B behalten nicht nur ihre mechanischen Eigenschaften (Flexibilität, Porosität etc.), sondern auch ihre Beschleunigerwirkung über einen längeren Zeitraum, wenn sie bei Raumtemperatur gelagert werden. Die Erhaltung der Beschleunigerwirkung wurde durch Bestimmung der Anspringtemperatur (Temperatur, bei der die Reaktion beginnt) mittels Differential Scanning Calorimetry (DSC) überprüft. Die Anspringtemperatur des Bandes A mit einem Epoxy-Anhydrid-lmprägnierharz (DER-332 von The Dow Chemical Company, Härter M von Bayer im Verhältnis 1:0,9) in einem dynamischen Versuch (10°C/min) betrug:

| Lagerung bei Raumtemperatur | Anspringtemperatur °C |
|---|---|
| Bei Anlieferung | 176 |
| Nach 65 Tagen | 177 |
| Nach 150 Tagen | 174 |
| Nach 210 Tagen | 176 |
| Nach 360 Tagen | 175 |

### Beispiel 2

In diesem Beispiel wurde ein flüssiger Beschleuniger (Zinknaphthenat) ohne Zuhilfenahme eines Lösungsmittels direkt auf einen Glimmer-Träger-Verbund gesprüht, der wie in Beispiel 1 beschrieben unter Verwendung eines Glasgewebes mit einem Flächengewicht von 24 g/m² als Träger hergestellt worden war. Durch geeignete Wahl der aufgesprühten Beschleunigermenge kann der Beschleunigergehalt des Bandes innerhalb weiter Grenzen variiert werden, so dass die gewünschte Härtungszeit des Imprägnierharzes für eine aus dem Band hergestellte Wicklung erreicht werden kann.

Durch Aufsprühen des Zinknaphthenats in verschiedenen Mengen wurden die Anspringtemperatur, die wie in Beispiel 1 bestimmt wurde, und die Porosität folgendermassen beeinflusst:

| | Band C | Band D |
|---|---|---|
| Beschleunigergehalt (g/m²) | 3,5 | 8 |
| Anspringtemperatur (°C) | 175 | 144 |
| Porosität (ASTM D 726) | 420 | 460 |

### Beispiel 3

Eine Feinglimmerfolie mit einem Flächengewicht von 160 g/m² und ein Glasgewebe mit einem Flächengewicht von 24 g/m² wurden mit einer Lösung eines Beschleunigers imprägniert, der durch Umsetzung einer Polyepoxidverbindung mit einem sekundären Amin hergestellt worden war, wie unter Ziffer 4 in Spalte 5, Zeilen 7 bis 15 der CH-PS Nr. 547 001 beschrieben. Nach dem Trocknen des vorimprägnierten Glasgewebes und der vorimprägnierten Feinglimmerfolie wurden diese wie in Beispiel 1 beschrieben unter Verwendung von Pulverlack miteinander verklebt.

Der Beschleunigergehalt des Bandes wurde durch Änderung der Konzentration der Beschleunigerlösung variiert. Es wurden eine 4gew.%ige und eine 10gew.%ige Lösung des Beschleunigers in Methylethylketon verwendet.

Die so hergestellten Bänder zeichnen sich durch eine ausgezeichnete Porosität aus.

| | Band E | Band F |
|---|---|---|
| Beschleunigergehalt (g/m²) | 1,2 | 4 |
| Luftdurchlässigkeit nach Gurley-Hill (ASTM D 726) | 240 | 450 |
| Biegefestigkeit (IEC 626-2, N/m) | 58 | 63 |

## Patentansprüche

1. Verfahren zur Herstellung von imprägnierbaren Feinglimmerbändern mit eingebautem Beschleuniger, die nach dem Aufwickeln auf die Leiter der Wicklungen von elektrischen Maschinen mit einem lösungsmittelfreien Imprägnierharz getränkt und danach unter Wärmeeinwirkung ausgehärtet werden, dadurch gekennzeichnet, dass man
A₁) eine Feinglimmerfolie mit einem von härtend wirkenden Komponenten freien Pulverlack, der mit einem Epoxy-Anhydrid-Imprägnierharzsystem chemisch zu reagieren vermag, bestreut,
B₁) entweder a) die mit dem Pulverlack bestreute Seite der Feinglimmerfolie unter dem Einfluss von Druck und Wärme mit einem Glasgewebe oder Vlies als Trägermaterial verklebt
oder b) ein Glasgewebe mit einem flüssigen Beschleuniger oder einer Lösung eines flüssigen oder festen Beschleunigers in einem niedrig siedenden Lösungsmittel imprägniert und das so erhaltene Trägermaterial unter dem Einfluss von Druck und Wärme mit der mit dem Pulverlack bestreuten Seite der Feinglimmerfolie verklebt und
C₁) das in Stufe B₁ erhaltene Verbundmaterial mit einem flüssigen Beschleuniger oder einer Lösung eines flüssigen oder festen Beschleunigers in einem niedrig siedenden Lösungsmittel imprägniert oder
A₂) eine Feinglimmerfolie mit einem flüssigen Beschleuniger oder einer Lösung eines flüssigen oder festen Beschleunigers in einem niedrig siedenden Lösungsmittel imprägniert,
B₂) die imprägnierte Feinglimmerfolie mit einem von härtend wirkenden Komponenten freien Pulverlack, der mit einem Epoxy-Anhydrid-Imprägnierharzsystem chemisch zu reagieren vermag, bestreut und
C₂) entweder a) ein Glasgewebe mit einem flüssigen Beschleuniger oder einer Lösung eines flüssigen oder festen Beschleunigers in einem niedrig siedenden Lösungsmittel imprägniert und das so erhaltene Trägermaterial unter dem Einfluss von Druck und Wärme mit der mit dem Pulverlack bestreuten Seite der Feinglimmerfolie verklebt oder b) ein Vlies als Trägermaterial unter dem Einfluss von Druck und Wärme mit der mit dem Pulverlack bestreuten Seite der Feinglimmerfolie verklebt.

2. Verfahren nach Anspruch 1, dadurch gekennzeichnet, dass man ein Glasgewebe mit einem Flächengewicht von 20 bis 40 g/m² verwendet.

3. Verfahren nach Anspruch 1, dadurch gekennzeichnet, dass man als Vlies einen Polyestervliesstoff mit einem Flächengewicht von 20 bis 30 g/m² oder ein Aramidpapier mit einem Flächengewicht von 25 bis 42 g/m² verwendet.

4. Verfahren nach einem der Ansprüche 1 bis 3, dadurch gekennzeichnet, dass man einen in niedrig siedenden Lösungsmitteln, beispielsweise Aceton oder Toluol, löslichen Beschleuniger verwendet.

5. Verfahren nach einem der Ansprüche 1 bis 4, dadurch gekennzeichnet, dass man als Beschleuniger eine stickstoffhaltige Verbindung, vorzugsweise ein Oxyaminharz der Teilformel: 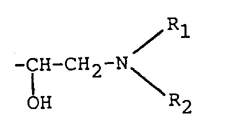 verwendet, worin R₁ und R₂, die gleich oder verschieden sind, jeweils eine unverzweigte Alkylgruppe mit bis zu 5 Kohlenstoffatomen bedeuten oder R₁ und R₂ zusammen eine niedere Alkylengruppe, die durch ein Heteroatom unterbrochen sein kann, bilden.

6. Verfahren nach einem der Ansprüche 1 bis 4, dadurch gekennzeichnet, dass man als Beschleuniger eine metallorganische Verbindung, vorzugsweise Zinknaphthenat, Kobaltnaphthenat, Zinkoctoat oder Kobaltoctoat, verwendet.

7. Verfahren nach einem der Ansprüche 1 bis 6, dadurch gekennzeichnet, dass man als Pulverlack ein Bisphenol-A-Epoxidharz mit einem Schmelzpunkt über 100°C verwendet.

8. Verfahren nach einem der Ansprüche 1 bis 7, dadurch gekennzeichnet, dass man dem Beschleuniger ein Klebharz beimischt, das mit dem Beschleuniger nicht reagiert, aber chemisch in die Isolation eingebaut wird, wenn das imprägnierbare Feinglimmerband mit einem Epoxidharz imprägniert wird.

9. Verfahren nach einem der Ansprüche 1 bis 8, dadurch gekennzeichnet, dass man einen Pulverlack mit einer Oberkorngrenze nicht grösser als 250 µm verwendet.

## Claims

1. Process for producing impregnatable disintegrated-mica strips with incorporated accelerator, which after being wound onto the conductors of coils of electrical machines are impregnated with a solvent-free impregnating resin and then cured under the effect of heat, characterised in that
A₁) a disintegrated-mica film is scattered with a hardener-free powder resin which is capable of reacting chemically with an epoxy-anhydrideimpregnating resin system,
B₁) either a) the side of the disintegrated-mica film scattered with the powder resin is adhesively bonded to a glass cloth or non-woven fabric as support material, under the influence of pressure and heat,
or b) a glass cloth is impregnated with a liquid accelerator or a solution of a liquid or solid accelerator in a low-boiling solvent and the resulting support material is adhesively bonded, under the influence of pressure and heat, to the side of the disintegrated-mica film scattered with the powder resin and
C₁) the compound material obtained in step B₁ is impregnated with a liquid accelerator or a solution of a liquid or solid accelerator in a low boiling solvent or
A₂) a disintegrated-mica film is impregnated with a liquid accelerator or a solution of a liquid or solid accelerator in a low boiling solvent,
B₂) the impregnated disintegrated-mica film is scattered with a hardener-free powder resin which is capable of reacting chemically with an epoxy-anhydride-impregnating resin system and
C₂) either a) a glass cloth is impregnated with a liquid accelerator or a solution of a liquid or solid accelerator in a low-boiling solvent and the resulting support material is adhesively bonded, under the influence of pressure and heat, to the side of the disintegrated-mica film which has been scattered with the powder resin
or b) a non-woven fabric as the support material is adhesively bonded, under the influence of pressure and heat, to the side of the disintegrated-mica film which has been scattered with the powder resin.

2. Process as claimed in claim 1, characterised in that a glass cloth with a weight per unit area of 20 to 40 g/m² is used.

3. Process as claimed in claim 1, characterised in that the non-woven fabric used is a non-woven polyester fabric with a weight per unit of area of 20 to 30 g/m² or an aramide paper with a weight per unit of area of 25 to 40 g/m².

4. Process as claimed in one of claims 1 to 3, characterised in that an accelerator which is soluble in low-boiling solvents, for example acetone or toluene, is used.

5. Process as claimed in one of claims 1 to 4, characterised in that the accelerator used is a nitrogen-containing compound, preferably a oxyamine resin of the partial formula: 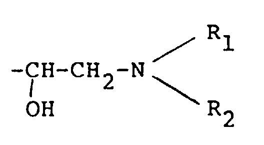 wherein R₁ and R₂, which may be identical or different, each represent an unbranched alkyl group with up to 5 carbon atoms or R₁ and R₂ together form a lower alkylene group which may be interrupted by a heteroatom.

6. Process as claimed in one of claims 1 to 4, characterised in that the accelerator used is an organometallic compound, preferably zinc naphthenate, cobalt naphthenate, zinc octoate or cobalt octoate.

7. Process as claimed in one of claims 1 to 6, characterised in that a bisphenol-A epoxide resin with a melting point of above 100°C is used as the powder resin.

8. Process as claimed in one of claims 1 to 7, characterised in that a tackifier resin is mixed with the accelerator, which resin does not react with the accelerator but is chemically incorporated in the insulation when the impregnatable disintegrated-mica strip is impregnated with an epoxide resin.

9. Process as claimed in one of claims 1 to 8, characterised in that a powder resin is used, the maximum particle size of which is not more than 250 µm.

## Revendications

1. Procédé de préparation de rubans de mica fin, aptes à l'imprégnation, avec accélérateur incorporé, qui après enroulement sur les conducteurs de bobinages de machines électriques sont imprégnés d'une résine d'imprégnation exempte de solvant et sont durcis ensuite par l'action de chaleur, caractérisé en ce que
A₁) on saupoudre une feuille de mica fin d'un vernis en poudre exempt de durcisseurs, capable de réagir chimiquement avec un système de résine d'imprégnation époxy-anhydride,
B₁) soit a) on colle le côté de la feuille de mica fin saupoudré du vernis en poudre, par l'action de pression et de chaleur, à un tissu de verre ou un feutre servant de support
soit b) on imprègne un tissu de verre d'un accélérateur liquide ou d'une solution d'un accélérateur liquide ou solide dans un solvant à bas point d'ébullition et l'on colle le support ainsi obtenu, par l'action de pression et de chaleur, au côté de la feuille de mica fin saupoudré du vernis en poudre et
C₁) on imprègne le stratifié obtenu à l'étape B₁ avec un accélérateur liquide ou avec une solution d'un accélérateur liquide ou solide dans un solvant à bas point d'ébullition ou
A₂) on imprègne une feuille de mica fin avec un accélarateur liquide ou avec une solution d'un accélérateur liquide ou solide dans un solvant à bas point d'ébullition,
B₂) on saupoudre la feuille de mica fin, imprégnée ci-dessus, d'un vernis en poudre exempt de durcisseurs, capable de réagir chimiquement avec un système de résine d'imprégnation époxy-anhydride et
C₂) soit a) on imprègne un tissu de verre d'un accélérateur liquide ou d'une solution d'un accélérateur liquide ou solide dans un solvant à bas point d'ébullition et l'on colle le support ainsi obtenu, par l'action de pression et de chaleur, au côté de la feuille de mica fin saupoudré du vernis en poudre
soit b) on colle un feutre servant de support, par l'action de pression et de chaleur, au côté de la feuille de mica fin saupoudré du vernis en poudre.

2. Procédé selon la revendication 1, caractérisé en ce que l'on utilise un tissu de verre d'un poids par unité de surface de 20 à 40 g/m².

3. Procédé selon la revendication 1, caractérisé en ce que l'on utilise comme feutre un feutre de polyester d'un poids par unité de surface de 20 à 30 g/m² ou un papier aramide d'un poids par unité de surface de 25 à 42 g/m².

4. Procédé selon l'une quelconque des revendications 1 à 3, caractérisé en ce que l'on utilise un accélarateur soluble dans les solvants à bas point d'ébullition, par exemple l'acétone ou le toluène.

5. Procédé selon l'une quelconque des revendications 1 à 4, caractérisé en ce que l'on utilise comme accélérateur un composé azoté, de préférence une résine d'oxyamine répondant à la formule partielle: 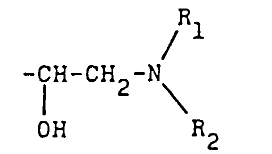 dans laquelle R₁ et R₂, qui sont identiques ou différents, représentent chacun un groupe alkyle non ramifié ayant jusqu'à 5 atomes de carbone ou R₁ et R₂ pris ensemble représentent un groupe alkylène inférieur qui peut être interrompu par un hétéroatome.

6. Procédé selon l'une quelconque des revendications 1 à 4, caractérisé en ce que l'on utilise comme accélérateur un composé organo-métallique, de préférence le naphténate de zinc, le naphténate de cobalt, l'octoate de zinc ou l'octoate de cobalt.

7. Procédé selon l'une quelconque des revendications 1 à 6, caractérisé en ce que l'on utilise comme vernis en poudre une résine de bisphénol A-époxyde d'un point de fusion supérieur à 100°C.

8. Procédé selon l'une quelconque des revendications 1 à 7, caractérisé en ce que l'on mélange à l'accélérateur une résine adhésive qui ne réagit pas avec l'accélérateur, mais qui est incorporée chimiquement à l'isolation lorsque le ruban de mica fin apte à l'imprégnation est imprégné par une résine époxyde.

9. Procédé selon l'une quelconque des revendications 1 à 8, caractérisé en ce que l'on utilise un vernis en poudre pour lequel la limite supérieure de la granulométrie ne dépasse pas 250 µm.
